# EUROPÄISCHE PATENTSCHRIFT

(11) **EP 2 296 840 B1**
(45) Veröffentlichungstag und Bekanntmachung des Hinweises auf die Patenterteilung: **18.01.2023**
(21) Anmeldenummer: 09734140.8
(22) Anmeldetag: 08.04.2009
(51) Int. Cl.: B23K 9/08

(54) **SCHWEISSEINRICHTUNG UND SCHWEISSVERFAHREN MIT BEWEGTEM LICHTBOGEN**
WELDING DEVICE AND WELDING METHOD HAVING MOVABLE ARC
DISPOSITIF DE SOUDAGE ET PROCÉDÉ DE SOUDAGE À ARC ÉLECTRIQUE MOBILE

(30) Priorität: 21.04.2008 DE 202008005534 U
(43) Veröffentlichungstag der Anmeldung: 23.03.2011
(73) Patentinhaber: KUKA Industries GmbH, 86165 Augsburg (DE)
(72) Erfinder: MACDONALD, Alan, 86483 Kissing (DE); GRÖGER, Walter, 86494 Emersacker (DE); HUBER, Rudolf, 81245 München (DE)
(74) Vertreter: Ernicke, Klaus Stefan
(86) Internationale Anmeldenummer: PCT/EP2009/054197
(87) Internationale Veröffentlichungsnummer: WO 2009/130131

(56) Entgegenhaltungen:
- EP-A1- 0 003 830
- EP-A2- 0 950 938
- DE-A1- 19 901 081
- FRANZ-JOSEF GANOWSKI: "The magnetic arc welding process" WELDING AND METAL FABRICATION, Juni 1974 (1974-06), Seiten 206-213, XP001342084

## Beschreibung

Die Erfindung betrifft eine Schweißeinrichtung mit den Merkmalen im Oberbegriff der Ansprüche 1 und 9.

Eine weitere Schweißeinrichtung zum elektrischen Lichtbogenschweißen mit einem magnetisch bewegten Lichtbogen ist z.B. aus der DE 36 15 011 A1 oder der EP 0 003 590 A1 bekannt. Derartige Schweißeinrichtungen können eine steuerbare Schweißstromquelle mit einer Stromregelung entsprechend der EP 0 092 642 A1 aufweisen. Zum Schweißen werden die Werkstücke von einer Positionier- und Staucheinrichtung zunächst mit ihren Stirnseiten in stromleitenden Kontakt gebracht und dann wieder auf einen Abstand (s) distanziert, wobei der Lichtbogen gezündet wird, der anschließend die Stirnflächen der Werkstücke erwärmt und anschmilzt. Beim Erwärmen wird die Position der Werkstücke konstant gehalten. Am Ende werden die Werkstücke in einem Stauchhub wieder zusammengefahren und an ihren geschmolzenen Stirnseiten unter Druck und Ausformung eines Schweißwulstes verschweißt.

Die vorbekannten Schweißeinrichtungen sind mit horizontaler Ausrichtung der zu verschweißenden Werkstücke gebaut worden. Sie sind für Werkstücke mit im wesentlichen gleichen Wandstärken und aus relativ gleich schmelzenden Materialien, insbesondere Stahl, ausgelegt. Die Wandstärke war in der Praxis begrenzt auf z.B. ca. 7 mm. Für das Schweißen ungleichartiger Werkstücke sind diese Schweißeinrichtungen weniger geeignet. Zur Vermeidung von Härterissen sind Nachglühvorgänge erforderlich. Außerdem wirkt bei horizontaler Werkstückausrichtung die Schwerkraft auf die Schmelze an den Werkstückstirnwänden ein und erfordert Ausgleichsmaßnahmen, um eine einigermaßen gleichmäßige Schmelzenverteilung sicherzustellen.

Die GB 2 094 694 A lehrt eine Schweißeinrichtung und ein Schweißverfahren, bei dem der Schweißstrom und der Spalt zwischen den Werkstückrändern in fest vorgegebenen Schritten verändert werden. Der Spalt wird nach dem Zünden des Lichtbogens in drei oder vier Schritten zu festgelegten Zeitpunkten und um festgelegte Maße stufenweise erhöht und innerhalb der Stufe wieder konstant gehalten. Auch der Strom wird während der Erwärmungsphase auf einem vorgegebenen Wert konstant gehalten und steigt im letzten Erwärmungsabschnitt sprunghaft an, wobei die Konstanz aufgehoben wird und der Schweißstrom kurz nach Stauchbeginn abgeschaltet wird. Mit diesen festen Strom- und Spaltvorgaben lassen sich nur einheitliche Werkstücke mit gleichem Schmelzverhalten ausreichend zuverlässig schweißen. Die festen Vorgaben erlauben keine prozessabhängige Steuerung von Werkstückspalt und Schweißstrom.

Die DE 199 01 081 A1 (Basis für den Oberbegriff der Ansprüche 1 und 9) befasst sich mit einer Schweißeinrichtung und einem Schweißverfahren, bei dem die Lichtbogenspannung und die damit korrelierende Spaltbreite zwischen den Werkstückrändern konstant gehalten werden sollen. Durch die Spannungs- und Spaltbreitenregelung sollen Wärmedehnungen der Werkstücke kompensiert werden. Durch die Spannungsregelung ist der Schweißstrom während der Erwärmung nicht konstant. Die Schweißstromquelle ist entsprechend ungeregelt. Auch diese Schweißtechnik setzt einheitlich Werkstücke mit gleichmäßigem Schmelzverhalten voraus.

Es ist daher Aufgabe der vorliegenden Erfindung, eine verbesserte Schweißtechnik mit bewegtem Lichtbogen aufzuzeigen.

Die Erfindung löst diese Aufgabe mit den Merkmalen der Ansprüche 1 und 9.

Die beanspruchte Schweißtechnik hat den Vorteil, dass sie auch für problematische Werkstücke und Werkstückpaarungen eingesetzt werden kann und zu optimalen und reproduzierbaren Schweißergebnissen führt. Insbesondere können Werkstücke mit einem unterschiedlichen Schmelzverhalten gefügt und geschweißt werden, die z.B. aus unterschiedlichen Materialien bestehen und/oder verschiedene Querschnittsgeometrien bzw. Wandstärken haben. Hierbei ist auch ein Schweißen von Metallguss, ggf. in der Paarung mit einem anderen Werkstück aus Stahl, möglich.

Mit der beanspruchten Schweißeinrichtung und dem zugehörigen Schweißverfahren kann der axiale Abstand (s) zwischen den Werkstücken bei deren Erwärmung in gesteuerter oder ggf. geregelter Weise verändert werden (Δs). Hierdurch kann gezielt der Erwärmungs- und Schmelzprozess beeinflusst werden. Dies kann unabhängig oder in Abstimmung mit anderen Prozessbeeinflussungen, z.B. einer Schweißstromregelung und/oder einer Lagenbeeinflussung für den Lichtbogen geschehen. Kurzschlüsse durch Tropfenbildung der Schmelze an den Werkstücken werden vermieden. Dies ist insbesondere für Werkstücke aus niedrigschmelzenden Materialien, speziell aus Metallguss, von Vorteil. Durch die vom Lichtbogen eingebrachte Wärmeenergie schmilzt dieses Werkstück schneller auf und bildet an seiner Stirnfläche ein oder mehrere Tropfen. Durch eine Abstandsvergrößerung kann ein Kurzschluss über den Tropfen verhindert werden. Außerdem kann der Tropfen vom umlaufend wandernden Lichtbogen entlang der Lichtbogenbahn getrieben werden. Bei einer Verringerung des Energieeintrags, z.B. durch die Abstandsvergrößerung, kann der Tropfen wieder verfestigt und angelegt werden, woraufhin die Abstandsvergrößerung reduziert werden kann. Diese Abstandsveränderungen können in einen Regelprozess eingebunden werden.

Eine vertikale oder schräge Maschinen- und Werkstückausrichtung ist vorteilhaft, um ungünstigen Schwerkrafteinflüssen auf die Schmelze begegnen zu können. Insbesondere für niedrigschmelzende Materialien, z.B. Metallguss, kommen diese Vorteile zum Tragen, wobei das oder die Werkstücke aus diesem Material ggf. unten angeordnet werden. Wenn Werkstücke mit verschiedenen Wandstärken geschweißt werden, wobei z.B. das dünnwandigere Werkstück schneller aufschmilzt, kann dieses unten angeordnet werden. Durch die aufrechte und untere Anordnung des schneller schmelzenden Werkstücks kann dessen Geometrie besser erhalten bleiben. Der Wärmeeintrag kann gleichmäßiger und die Tropfenbildung geringer sein.

Es ist auch möglich, die Einflussfaktoren von Material und Wandstärke auf das Schmelzverhalten bei den Werkstücken aufeinander abzustimmen und ggf. anzugleichen. Hierbei kann z.B. ein Werkstück mit schlechter oder bei höherer Temperatur schmelzendem Material eine dünne Wandstärke aufweisen und mit einem Werkstück aus schneller schmelzendem Material und dafür dickerer Wandstärke kombiniert werden. Die Werkstücke haben dadurch in etwa das gleiche Schmelzverhalten. Das Werkstück aus schneller schmelzendem Material kann dabei unten angeordnet werden und mit seiner Fügeseite nach oben weisen. Es ist auch eine Umkehr der Anordnung möglich. Ferner sind Mehrkopfmaschinen möglich, die drei oder mehr fluchtend angeordnete Werkstücke in einem Arbeitsgang verschweißen. In diesem Fall ist u.U. eine optimale Anordnung nicht bei allen Werkstücken möglich.

Die aus dem unterschiedlichen Schmelzverhalten der Werkstücke resultierende Tropfenbildung kann in der eingangs erwähnten Weise erfasst und über die Steuerung und ggf. Regelung des Abstands (s) und ggf. des Schweißstroms beeinflusst und beherrscht werden. Hierbei kann außerdem eine Stromregelung der Stromquelle (25) zum Tragen kommen. Außerdem kann das Bewegungsverhalten des Lichtbogens in Umlaufrichtung und/oder quer dazu durch Steuerung einer Treibeinrichtung, insbesondere einer Magnet- und/oder Induktionseinrichtung, beeinflusst werden. Bei dickwandigeren Werkstücken kann hierdurch die Spurlage des Lichtbogens verändert und die dickwandigere Stirnfläche in gezielter Weise, insbesondere über die Dicke gleichmäßig, erwärmt werden.

Das Abhubverhalten bzw. die Änderung Δs des Abstands (s) kann konstant oder kontinuierlich veränderbar sein. Es ist auch eine dynamische Anpassung des Abhubverhaltens an den Erwärmungs- und Anschmelzprozess entsprechend einer Prozessanalyse möglich.

Mit der erfindungsgemäßen Schweiß- und Erwärmungstechnik können hinsichtlich Material und/oder Wandstärke kritische Werkstückpaarungen mit großer Sicherheit und Qualität geschweißt werden. Ferner können Werkstücke mit dickeren Wandstärken als bisher verschweißt werden. Es ist insgesamt eine bessere Schweißqualität erreichbar, wobei das Schweißverfahren und die Schweißeinrichtung sich auch mit Erfolg für gleichartige Werkstücke einsetzen lassen. Vorteilhaft ist außerdem, dass das bisher häufig erforderliche Nachglühen der gefügten Werkstücke nach dem Schweißen entfallen oder zumindest wesentlich reduziert werden kann.

Die beanspruchte Schweißtechnik sorgt für eine gleichmäßigere Erwärmung der Werkstücke an den einander zugekehrten Stirnflächen oder Schweißflächen. Dies erlaubt andererseits eine Reduzierung des Stauchgrades und der Stauchwulstbildung. Hierbei können der Stauchweg und/oder die Stauchkraft reduziert werden.

Die beanspruchte Schweißtechnik hat einen größeren und universelleren Einsatzbereich als vorbekannte Konstruktionen sowie Verfahren und bietet eine maximale Flexibilität. Die genannten Prozessvorteile äußern sich außerdem in einer erhöhten Wirtschaftlichkeit der Schweißeinrichtung und des Schweißverfahrens.

In den Unteransprüchen sind weitere vorteilhafte Ausgestaltungen der Erfindung angegeben.

Die Erfindung ist in den Zeichnungen beispielsweise und schematisch dargestellt. Im einzelnen zeigen:
- Figur 1:: eine perspektivische Ansicht einer Schweißeinrichtung ohne Werkstücke,
- Figur 2:: eine reduzierte perspektivische Ansicht der Schweißeinrichtung von Figur 1 mit Werkstücken,
- Figur 3:: eine Prinzipdarstellung der Schweißstelle zwischen den Werkstücken,
- Figur 4 bis 6:: verschiedene Diagramme für eine Steuerung der Abstandsänderung zwischen den Werkstücken und
- Figur 7:: eine Variante der Schweißeinrichtung mit horizontaler Ausrichtung der Werkstücke.

Die Erfindung betrifft eine Schweißeinrichtung (1) und ein Verfahren zum Schweißen von Werkstücken (3,4) mit mindestens einem bewegten Lichtbogen (8).

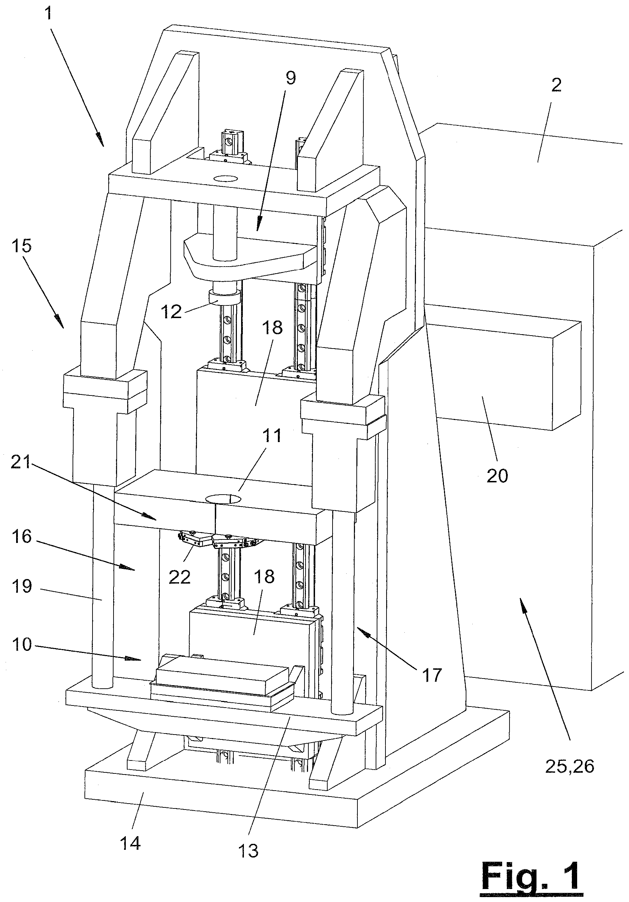

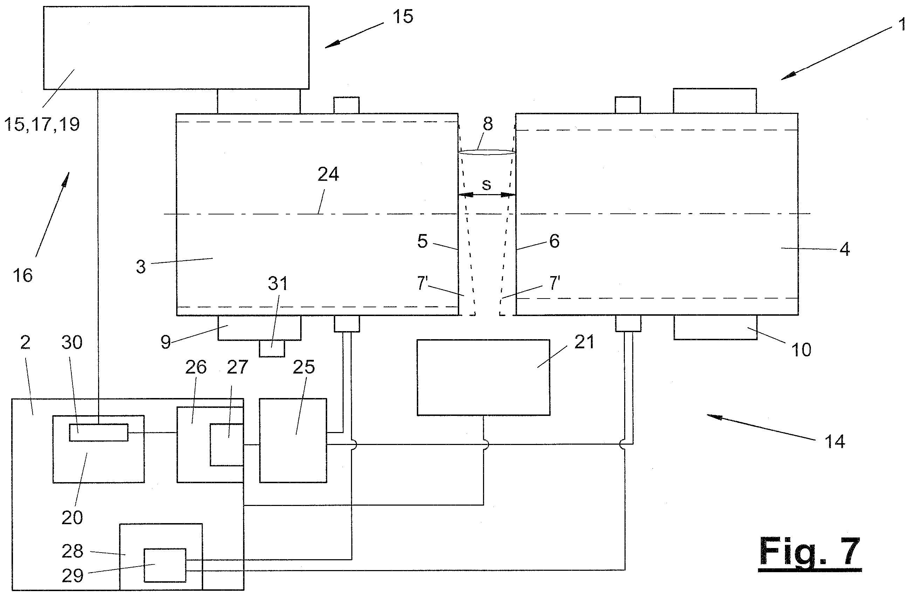

Die Schweißeinrichtung (1) kann unterschiedlich ausgebildet sein. Figur 1 bis 3 zeigen ein erstes Ausführungsbeispiel in Form einer Vertikalmaschine. In Figur 7 ist eine Variante mit einer Horizontalmaschine schematisch dargestellt, deren konstruktive Ausgestaltung im Prinzip die gleiche wie im ersten Ausführungsbeispiel sein kann.

Die Werkstücke (3,4) können von beliebiger Art und Größe sein. Vorzugsweise handelt es sich um hohle Bauteile, insbesondere Rohre, die an ihren einander zugekehrten Stirnflächen (5,6) verschweißt werden. Die Werkstücke (3,4) können eine gleiche oder unterschiedliche Art und Ausbildung haben. Sie können insbesondere aus gleichen oder unterschiedlichen Werkstoffen bestehen und in der Ausbildung als Hohlbauteile gleiche oder unterschiedliche Wandstärken haben. Ferner können die Querschnittsgeometrien gleich oder unterschiedlich sein. Die Querschnitte können eine kreisrunde, ovale, prismatische oder sonstige schweißgeeignete Formgebung, vorzugsweise mit einem geschlossenen Querschnitt haben. Die Werkstoffe der Werkstücke (3,4) sind elektrisch leitfähig.

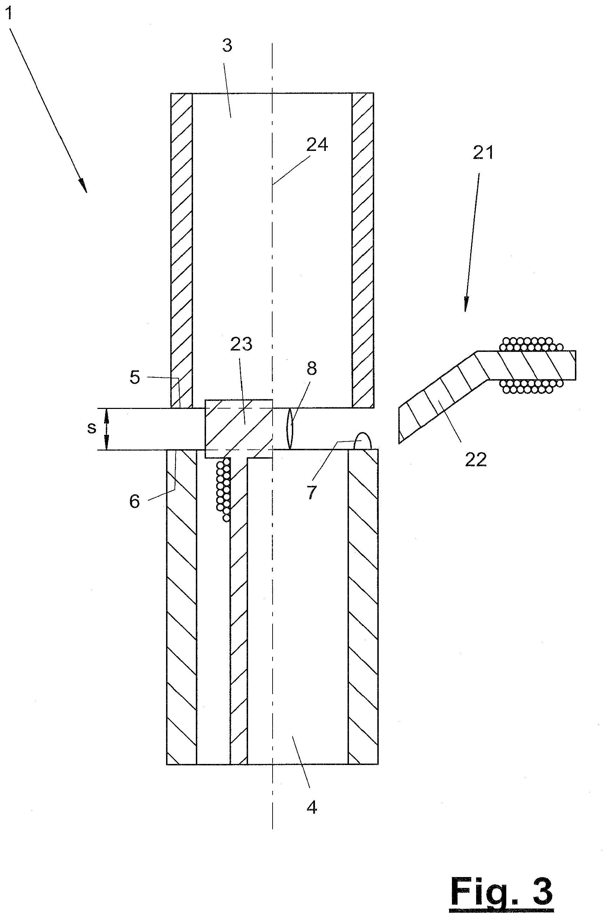

In den gezeigten Ausführungsbeispielen von Figur 1 bis 3 und 7 sind die Werkstücke (3,4) unterschiedlich ausgebildet. Sie bestehen aus unterschiedlichen Werkstoffen, wobei z.B. das in Figur 3 gezeigte untere Werkstück (4) aus einem metallischen Gussmaterial, z.B. einem Stahlguss oder Grauguss besteht. Das obere Werkstück (3) kann aus Stahl oder einem anderen Material bestehen. Die Werkstücke (3,4) sind im gezeigten Ausführungsbeispiel als zylindrische Rohre mit einem kreisrunden Querschnitt ausgebildet, wobei das untere Werkstück (4) eine größere Wandstärke im Stirnflächenbereich hat als das obere Werkstück (3).

Bei der Variante von Figur 7 hat das linke Werkstück (3) eine kleinere Wandstärke als das rechte Werkstück (4). Die Werkstücke (3,4) können aus gleichen oder unterschiedlichen Materialen bestehen. Alternativ kann auch hier ein Werkstück aus einem Gussmaterial, Kupfer, Aluminium oder dgl. niedrig schmelzenden Materialien und das andere Werkstück aus Stahl bestehen. Das Werkstück aus dem Gussmaterial oder dgl. kann die größere Wandstärke als das stählerne Werkstück haben. Die Anordnung kann aber auch umgekehrt sein.

Die Werkstücke (3,4) werden zum Schweißen axial zueinander ausgerichtet, wobei sie z.B. entlang der gemeinsamen Zentralachse (24) fluchtend angeordnet sind. Sie können alternativ im Rahmen der Stirnflächenüberdeckung versetzt angeordnet sein. In der in Figur 1 bis 3 gezeigten Ausführungsform sind die Werkstücke (3,4) im wesentlichen vertikal ausgerichtet. Sie können alternativ eine schräge Ausrichtung haben. Auch die in Figur 7 dargestellte horizontale Ausrichtung ist möglich. Bei einer vertikalen oder schrägen Ausrichtung wird bevorzugt das schneller schmelzende Werkstück (4) unten angeordnet.

Die Stirnflächen (5,6) werden durch einen Lichtbogen (8) erwärmt, der entlang des Werkstückumfangs an den Stirnflächen (5,6) umläuft. Die Werkstücke (3,4) werden zum Zünden des Lichtbogens zunächst in stromleitenden Kontakt gebracht und anschließend wieder distanziert und zum Erwärmen der Stirnflächen (5,6) mit dem Lichtbogen (8) auf einem Abstand (s) gehalten. Durch die über den Lichtbogen (8) eingebrachte Wärmeenergie werden die Stirnflächen (5,6) aufgeschmolzen. Die Werkstücke (3,4) können hierbei ein gleiches oder unterschiedliches Schmelzverhalten zeigen. Im Ausführungsbeispiel von Figur 1 bis 3 schmilzt das untere Werkstück (4) schneller. Bei der Variante von Figur 7 kann z.B. das linke Werkstück (3) schneller schmelzen.

Sobald ein ausreichender Schmelzgrad erreicht ist, werden die Werkstücke (3,4) axial mit einem Stauchhub aufeinander zubewegt, in Kontakt gebracht und gegeneinander gedrückt. Hierbei findet eine Verschweißung der Werkstücke (3,4) an den aufgeschmolzenen Stirnwandbereichen (5,6) statt, wobei ein Teil der Schmelze ggf. radial nach innen und/oder außen gedrückt wird und einen Schweißwulst bildet, der ggf. anschließend entfernt wird.

Die Schweißeinrichtung (1) weist ein Gestell (14), zwei oder mehr relativ zueinander bewegliche Werkstückhalterungen (9,10) zur Aufnahme der Werkstücke (3,4), mindestens eine steuerbare (26) Schweißstromquelle (25), eine Steuerung (2) und eine Positionier- und Staucheinrichtung (15) auf, mit der die eingespannten Werkstücke (3,4) positioniert und in der vorerwähnten Weise gestaucht werden können. Die Schweißeinrichtung (1) besitzt außerdem eine Treibeinrichtung (21), mit der der Lichtbogen (8) umlaufend am Werkstückumfang entlang bewegt werden kann.

Die Schweißeinrichtung (1) weist ferner eine Einrichtung (16) zur Steuerung und Veränderung Δs des Abstands (s) zwischen den Werkstücken (3,4) bei deren Erwärmung auf. Die Schweißeinrichtung (1) besitzt auch eine Einrichtung (28) zur Erfassung und Analyse von einem oder mehreren Prozessparametern, insbesondere der Lichtbogenspannung, und eine Einrichtung (30) zur Regelung des Schweißprozesses über den Abstand (s) und/oder andere Prozessparameter, insbesondere die Schweißspannung oder den Schweißstrom.

Die Treibeinrichtung (21) kann in beliebig geeigneter Weise ausgebildet sein, z.B. entsprechend der DE 36 15 011 A1, DE 37 13 418 A1 oder EP 0 003 590 A1. Sie kann aus ein oder mehreren Teilen bestehen. Sie ist z.B. als Magneteinrichtung ausgebildet, welche den Lichtbogen (8) mit elektromagnetischen Kräften bewegt. Die Magneteinrichtung (21) ist z.B. als mit Gleichstrom betriebene Magnetspulenanordnung ausgebildet. Sie kann ein oder mehrere Außenspulen (22) und/oder Innenspulen (23) aufweisen. In Figur 3 sind beide Anordnungen beispielhaft im Halbschnitt dargestellt.

Alternativ oder zusätzlich kann eine Induktionseinrichtung vorhanden sein, die mit Wechselstrom induktive Felder zur Beeinflussung des Lichtbogenlaufs erzeugt.

Die Treibeinrichtung (21) ist steuerbar und erlaubt eine örtlich und/oder zeitlich variable Beeinflussung der Lichtbogenbewegung. Sie kann hierfür eine eigene Steuerung haben oder mit der Steuerung (2) verbunden sein. Der Lichtbogen (8) kann z.B. beschleunigt und/oder in seinem Bahnverlauf verändert, insbesondere quer zur Umlaufrichtung ausgelenkt werden.

Die in Figur 1 und 7 schematisch angedeutete elektrische Schweißstromquelle (25) ist gemäß der Erfindung steuerbar und weist eine eigene oder in die Steuerung (2) integrierte Schweißstromsteuerung (26) auf.

Die Schweißstromsteuerung (26) weist auch eine Einrichtung (27) zur Stromregelung auf.

Diese misst und regelt den konstant abgegebenen Schweißstrom durch Erhöhung oder Senkung der Schweißspannung auf einen einstellbaren Strom-Vorgabewert. Eine derartige steuerbare Schweißstromquelle (25) mit Stromregelung wird auch als steuerbare Konstantstromquelle bezeichnet. Alternativ wird gemäß der Erfindung der Schweißstrom gepulst.

Von der Schweißstromsteuerung (26) können auch Stromprogramme verwendet werden. Der Strom-Vorgabewert kann über das Stromprogramm eingestellt und verändert werden. Er kann z.B. in Stufen verändert und innerhalb der Stufen konstant gehalten werden. Der Strom-Vorgabewert kann aber auch in Rampen oder anderen Kurven verändert werden. Ferner kann die Schweißstromsteuerung (26) auch auf Veränderungen im Schweißprozess reagieren und den Schweißstrom den Prozesserfordernissen entsprechend steuern, ggf. durch Rückgriff auf eine TechnologieDatenbank. Die Steuerung (26) der Schweißstromquelle (25) kann zugleich die Maschinensteuerung (2) sein und auch die anderen Komponenten der Schweißeinrichtung (1) beaufschlagen.

In der Ausführungsform von Figur 1 bis 3 ist die Schweißeinrichtung (1) als Vertikalmaschine mit im wesentlichen senkrecht ausgerichteten Werkstücken (3,4) ausgebildet. Die Achse (24) ist in der vorerwähnten Weise vertikal ausgerichtet. Sie kann alternativ in der in Figur 7 schematisch dargestellten Weise als Horizontalmaschine mit horizontaler Achse (24) ausgestaltet sein oder eine andere Ausbildung haben.

In der in Figur 1 bis 3 gezeigten Ausführungsform sind die obere und die untere Werkstückhalterung (9,10) beweglich am Gestell (14) gelagert und geführt. Eine Beweglichkeit besteht insbesondere in Richtung der Achse (24), die im gezeigten Ausführungsbeispiel vertikal ausgerichtet ist. Hierdurch können die Werkstücke (3,4) einander angenähert und voneinander distanziert werden. Die Werkstückhalterungen (9,10) sind hierfür mit einem geeigneten Bewegungsorgan, z.B. einem vertikal geführten Schlitten (18) verbunden und haben eine gemeinsamen Antrieb (19) oder getrennte Antriebe. Sie sind am Gestell (14) in geeigneter Weise über Schienen oder dgl. axial geführt.

Für die Erfassung der Werkstückbewegung kann eine in Figur 7 gezeigte Messeinrichtung (31), z.B. ein Weggeber am Antrieb (19) und/oder an mindestens einer Werkstückhalterung (9,10) und/oder an anderer geeigneter Stelle der Schweißvorrichtung (1), angeordnet sein. Bei der Variante von Figur 1 bis 3 ist die nicht dargestellte Anordnung entsprechend anders.

Der oder die Antriebe (19) können in beliebig geeigneter Weise ausgebildet sein. Sie bestehen z.B. aus hydraulischen oder pneumatischen Zylindern, einem elektromotorischen Spindelantrieb oder dgl.. Die Antriebe (19) sind steuerbar und sind hierzu mit der Steuerung (2) oder der Steuereinrichtung (16) verbunden.

Die Werkstückhalterungen (9,10) können in beliebig geeigneter Weise ausgebildet sein. In dem in Figur 1 bis 3 gezeigten Ausführungsbeispiel sind sie am oberen und unteren Maschinenende angeordnet und weisen jeweils einen Werkstückspanner (12) für eines der Werkstücke (3,4) auf. Der untere Werkstückspanner (12) kann auf einem querliegenden Joch (13) angeordnet sein, welches mit einem Antrieb (19) verbunden sein kann.

Im gezeigten Ausführungsbeispiel wird das obere Werkstück (3) an seinem oberen Ende vom Werkstückspanner (12) gehalten und am unteren Ende in einen Zentrumspanner (11) mit exakter Ausrichtung eingespannt. Der Zentrumspanner (11) kann an einem stationären Querjoch angeordnet sein. Er kann mit der Spulenanordnung (21) verbunden sein, wobei z.B. gemäß Figur 1 an der Jochunterseite eine Außenspule (22) angeordnet ist.

Mit der Positionier- und Staucheinrichtung (15) können die Werkstücke (3,4) in eine Ruhestellung auseinander bewegt werden, in der ein Werkstückwechsel und ein Umspannen stattfinden kann. Mit der Positionier- und Staucheinrichtung (15) werden die Werkstücke (3,4) auch in die Arbeitsposition bewegt, wobei sie zum Zünden des Lichtbogens in Kontakt gebracht und anschließend auf den Abstand (s) distanziert werden. Mit der Einrichtung (15) wird nach der Erwärmung auch der Stauchhub ausgeführt. Die Werkstückhalter (9,10), die Schlitten und der oder die Antriebe (19) können Bestandteil der Positionier- und Staucheinrichtung (15) sein, die außerdem eine geeignete Steuerung aufweist oder mit der Steuerung (2) verbunden ist.

Mit der Steuereinrichtung (16) wird der Abstand (s) über einen Vertikalhub verändert (Δs). Die Steuerungseinrichtung (16) weist hierbei eine Hubeinrichtung (17) zum Bewegen von mindestens einem Werkstück (3,4) auf. Die Abstandsänderung (Δs) kann von beliebiger Art und Größe sein. Sie kann kontinuierlich oder diskontinuierlich sein. Der Gradient kann konstant oder ungleichmäßig sein.

Die Steuerungseinrichtung (16) weist ein Steuerteil (20) zum Steuern der Hubeinrichtung (17) und der Abstandsveränderungen auf. Das Steuerteil (20) besitzt eine Recheneinheit mit einem oder mehreren Speichern zur Aufnahme von Programmen, insbesondere Steuer- und Regelprogrammen sowie weiteren Daten, insbesondere Prozessparametern, Werkstückdaten und dgl.. Das Steuerteil (20) besitzt außerdem eine oder mehrere Schnittstellen zur Ein- und Ausgabe von Daten und kann hierüber an geeignete Eingabe- und Ausgabegeräte angeschlossen sein. Das Steuerteil (20) kann eigenständig angeordnet sein. Es kann auch in der in Figur 1 und 7 angedeuteten Weise in die Steuerung (2) der Schweißeinrichtung (1) integriert oder dieser zugeordnet sein.

Das Steuerteil (20) oder die Steuerung (2) kann eine Einrichtung (28) zur Erfassung und Analyse von Prozessparametern haben. Hierbei kann z.B. durch eine geeignete Messeinrichtung (29) die Lichtbogenspannung aufgenommen, gespeichert und durch Vergleiche analysiert werden. Figur 7 zeigt diese Anordnung schematisch. Die Auswertung der Lichtbogenspannung kann z.B. in Abhängigkeit vom jeweiligen Schweißstrom erfolgen. Aus der Lichtbogenspannung und deren Verlauf, insbesondere in Anbetracht des momentanen Schweißstroms, lässt sich der Prozess und insbesondere das Aufschmelzverhalten der Werkstücke (3,4) analysieren.

Die Steuerungseinrichtung (16) und insbesondere deren Steuerteil (20) kann mit der Messeinrichtung (31) verbunden sein. Hierdurch kann die Position und/oder der Weg von mindestens einem Werkstück (3,4) beim Schweißprozess erfasst werden. Über die Positions- und Wegmessung können die Kontaktposition der Werkstücke (3,4) zu Prozessbeginn referenziert und der Stellweg oder Hub der Hubeinrichtung (17) gesteuert werden.

Das Steuerteil (20) steuert die Abstandsänderung (Δs). Es kann sie auch regeln. Es weist gemäß der Erfindung hierfür eine Einrichtung (30) zur Prozessregelung anhand aufgenommener Prozessparameter, z.B. der Lichtbogenspannung, auf**.**

Über die erfasste Lichtbogenspannung und/oder einen anderen Prozessparameter können z.B. ungleichmäßige Erwärmungen und Schmelzzustände, insbesondere eine Tropfenbildung, an den Werkstücken (3,4) detektiert werden, wobei die Steuerungseinrichtung (16) den Abstand (s) und die Änderung (Δs) zur Stabilisierung des Prozesses und der Erwärmung entsprechend steuert oder regelt. Zusätzlich kann die Schweißstromsteuerung (26) von der Prozessregelung (30) beaufschlagt werden.

Das Steuerteil (20) kann einen grafischen Editor und eine geeignete Anzeige für die Erstellung und Anzeige von Steuer- oder Regelkurven besitzen. Anhand von Kalibrierschweißungen können ein oder mehrere Prozessparameter während des Schweißprozesses aufgenommen werden. Dies können z.B. die Lichtbogenspannung, der Abstand (s) bzw. der Weg oder die Position der Werkstücke (3,4) oder der Werkstückhalterungen (9,10), die Feldstärke der Spulenanordnung (21) und/oder andere Parameter sein. Die Parameter können in Abhängigkeit von der Zeit und ggf. auch vom Weg oder anderen Vorgaben aufgenommen und gespeichert werden. Anhand von Kalibrierschweißungen wird ein Istwert-Verlauf der Parameter, insbesondere des Abstands (s), ermittelt und als Sollwertvorgabe für den späteren Serienbetrieb verwendet. Hierzu können auch Parametertoleranzen zur Definition von oberen und unteren Grenzwerten oder Schwellwerten ermittelt werden, aus denen für die spätere Serienschweißung obere und untere Grenzlinien oder -kurven für den Sollwertverlauf abgeleitet werden können. Im Steuerteil (20) kann auch eine Technologiedatenbank hinterlegt sein. Der grafische Editor und sein Einsatz können in ähnlicher Weise wie in der EP 0 950 938 A2 ausgebildet sein und funktionieren.

Die Hubeinrichtung (17) kann eigenständig ausgebildet und angeordnet sein. In dieser Ausführung hat die Hubeinrichtung (17) mindestens einen eigenen Antrieb (19) und beaufschlagt mindestens einen Werkstückhalter (9,10), wobei die Positionier- und Staucheinrichtung (15) ggf. überlagert wird. Die Hubeinrichtung (17) kann alternativ mit der Positionier- und Staucheinrichtung (15) verbunden sein und kann insbesondere ein Bestandteil dieser Einrichtung (15) sein. Die Hubeinrichtung (17) kann eine zusätzliche Funktionalität der Positionier- und Staucheinrichtung (15) sein. Der Hub kann je nach Achsausrichtung vertikal, horizontal oder schräg erfolgen.

In der Ausführungsform von Figur 1 bis 3 ist das bei niedrigerer Temperatur schmelzende Werkstück (4) unten angeordnet. Es besteht z.B. aus einem Gussmaterial und kann auch eine größere Wandstärke als das obere Werkstück (3) aus Stahl haben. Zu Beginn des Schweißprozesses werden nach dem Einspannen die Werkstücke (3,4) von der Positionier- und Staucheinrichtung (15) aufeinander zubewegt und an den Stirnflächen (5,6) in Kontakt gebracht. Anschließend werden sie unter Anlegung der Schweißspannung auf einen anfänglichen Abstand (s) von der Einrichtung (15) auseinander gefahren, wobei der Lichtbogen (8) gezündet wird und die Stirnflächen (5,6) zu erwärmen beginnt. Durch das unterschiedliche Schmelzverhalten schmilzt der Werkstoff an der unteren Stirnfläche schneller auf, wobei es zur Bildung von ein oder mehreren Tropfen (7) kommen kann. Wenn diese Tropfen (7) wachsen und zu groß werden, kann es zu einem Kurzschluss mit der gegenüberliegenden Stirnwand (5) kommen.

Mit der Steuereinrichtung (16) kann dies verhindert werden, indem bedarfsgerecht der Abstand (s) vergrößert (Δs) wird. Hierbei bewegt, insbesondere hebt und/oder senkt, die Hubeinrichtung (17) z.B. das untere Werkstück (4) gegenüber dem beim Erwärmen relativ ortsfest gehaltenen oberen Werkstück (3). Durch die Abstandsvergrößerung Δs steigt die Lichtbogenspannung und sinkt ggf. der Schweißstrom, wodurch auch der Wärmeeintrag an den Stirnwänden (5,6) verringert werden kann. Dies kann zu einem Erkalten und Anlegen des oder der Tropfen (7) führen. Außerdem treibt der umlaufende Lichtbogen (8) den oder die Tropfen entlang seiner Umlaufbahn.

Der vergrößerte Abstand (s) kann anschließend wieder verkleinert werden, wobei der Wärmeeintrag steigen kann. Wenn eine erneute Tropfenbildung entsteht, kann der Abstand (s) wieder vergrößert werden.

Die Arbeit der Steuereinrichtung (16) und die Abstandsänderung kann mit einer Veränderung von ein oder mehreren weiteren Prozessparametern kombiniert werden. Hierbei kann z.B. die Schweißspannung bei einer Abstandsvergrößerung nachgeführt werden, um den Energieeintrag an den Stirnflächen (5,6) in geeigneter Weise zu beeinflussen und z.B. konstant zu halten. Hierbei können auch die besagten Stromprogramme abgefahren werden. Ferner ist es möglich, die Lichtbogenbewegung über die Treibeinrichtung (21) zu beeinflussen und den Lichtbogen (8) mit der gewünschten Kinematik und auf der gewünschten Bahn an ein oder beiden Stirnflächen (5,6) zu bewegen.

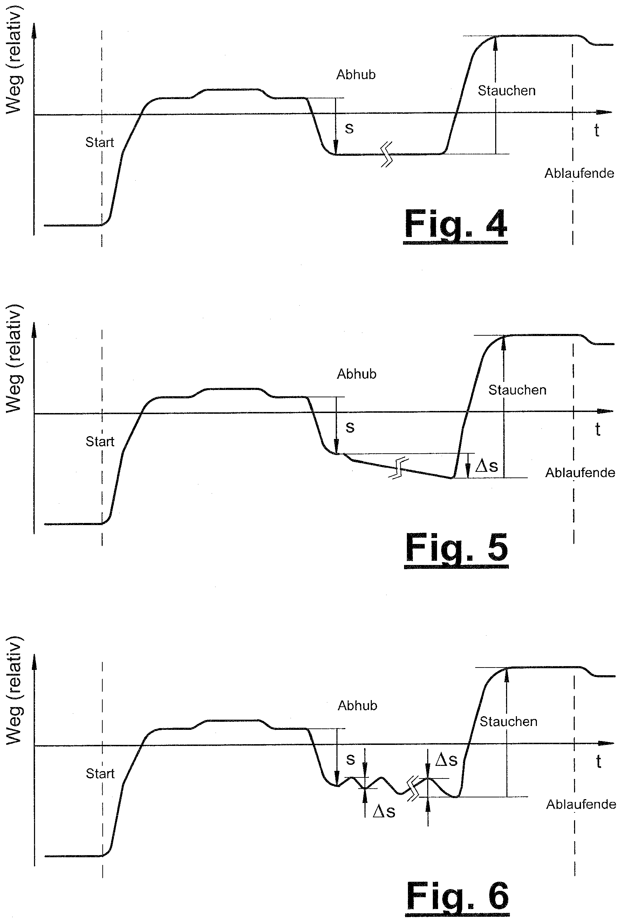

Figur 4 bis 6 zeigen in Diagrammen verschiedene Varianten von Abstandseinstellungen. Der relative Weg der Werkstücke (3,4) ist hierbei über der Zeit aufgezeigt.

In der Variante von Figur 4 werden die Werkstücke (3,4) zunächst in Kontakt gebracht und dann zum Zünden des Lichtbogens wieder ein kleines Stück unter Bildung des anfänglichen Abstands (s) distanziert. Dieser Vorgang wird im Diagramm als Abhub bezeichnet. Figur 4 gibt den Stand der Technik wieder, bei dem der Abstand (s) konstant bleibt und die Werkstücke (3,4) erst zum Stauchen wieder einander angenähert werden und zusammengepresst werden.

Figur 5 gibt eine erste erfindungsgemäße Ausführungsform wieder, in der nach dem anfänglichen Abhub (s) und dem Zünden des Lichtbogens (8) sofort oder mit einer zeitlichen Verzögerung der Abstand (s) unter Bildung von Δs weiter vergrößert wird. In Figur 5 ist dies eine stetige und konstante Abstandsänderung Δs. Alternativ können ein oder mehrere Haltezonen vorgesehen sein, in denen der Abstand (s) eine Zeitlang konstant gehalten wird und der Kurvenverlauf von (s) bzw. Δs eine oder mehrere Stufen aufweist.

In der Variante von Figur 6 ist eine reversierende oder oszillierende Abstandsänderung mit über der Zeit steigenden Amplituden dargestellt. Der anfängliche Abstand (s) wird zunächst ein Stück Δs reduziert und dann wieder vergrößert. Anschließend findet eine Reduzierung mit einer neuerlichen Vergrößerung statt. Dieser Vorgang kann sich mehrfach wiederholen, wobei die Amplituden und der untere oder äußere Scheitelwert des Abstands (s) über der Zeit größer werden. Am Schluss findet wieder der übliche Stauchvorgang statt. Alternativ können reversierende oder oszillierende Abstandsänderungen bei im wesentlichen gleich bleibender Amplitude vorgenommen werden.

Die in Figur 5 und 6 gezeigten Verläufe der Abstandsänderung Δs können entsprechend der Prozesserfordernisse und der Werkstückpaarungen weiter variiert und auch miteinander kombiniert werden.

Die vorstehend angesprochene Horizontalmaschine ist in Figur 7 schematisch dargestellt. Die konstruktive Ausgestaltung der verschiedenen Maschinenkomponenten kann mit entsprechend geänderter Ausrichtung und Anordnung die gleiche wie beim ersten Ausführungsbeispiel von Figur 1 bis 3 sein.

Bei horizontaler Ausrichtung der Werkstücke (3,4) neigt die Schmelze an den Werkstückrändern (5,6) dazu, durch Schwerkraft nach unten zu wandern. Hierdurch ergibt sich der gestrichelt und schematisch dargestellte Verlauf des Schmelzbads (7'), wobei der axiale Abstand zwischen den Schmelzbadoberflächen und damit auch der axiale Abstand (s) der Werkstücke (3,4) sich in vertikaler Richtung verändert. Der Abbrand und der Abstand (s) ist an der Oberseite der Werkstücke (3,4) durch den Abfluss der Schmelze größer als an der Unterseite. Dementsprechend ist auch die Länge des zwischen den Schmelzbadoberflächen bzw. den Werkstückrändern (5,6) brennenden Lichtbogens (8) entsprechend seiner vertikalen Position unterschiedlich.

Die zunehmende Schmelzbaddicke an der Unterseite verstärkt die Kurzschlussgefahr. Andererseits ergibt sich eine über dem Frontquerschnitt und insbesondere in der Vertikalen veränderte Flächenpressung beim Stauchen. Sie ist wegen der schrägen Spaltbildung unten größer als der Werkstückoberseite. Außerdem sind der Energieeintrag und die Wärmedehnung an der Werkstückoberseite größer als unten. Die elastischen Spannungen bzw. die Wärmedehnungen können sich nach dem Ausspannen aus der Schweißeinrichtung ausgleichen. Die kann durch einen entsprechenden Vorhalt der Werkstückhalterungen (9,10) bzw. ihrer Werkstückspanner weitgehend kompensiert werden.

Beim Horizontalschweißen nimmt die aus Lorentz-Zentrifugal- und Schwerkraft resultierende und auf den Lichtbogen (8) wirkende Kraft im Lichtbogenlauf über dem Werkstückumfang stetig andere Werte an. Die Folge ist eine über den Umlauf veränderliche radiale Position und Geschwindigkeit des Lichtbogens. Dementsprechend ungleichmäßig erfolgen die Energieeinbringung und das Anschmelzen der Werkstückränder (5,6). Dies ist besonders bei größeren Wanddicken des in Figur 7 z.B. rechten Werkstücks (4) ausgeprägt. Auch bei Werkstücken aus niedrig schmelzendem Material, z.B. einem Gussmaterial, zeigt sich dieser Effekt. Wenn die Werkstücke (3,4) aus unterschiedlich schmelzenden Materialien bestehen, können sich auch unterschiedlich große und geformte Schmelzbäder (7') ergeben.

Durch die Erfassungseinrichtung (28) kann die Lichtbogenspannung erfasst und ausgewertet werden. Hierbei können sowohl die Spannungshöhen, wie auch die Spannungsamplituden erfasst werden, was je nach Auflösung der Messeinrichtung (29) pro Umlauf oder zumindest über eine Gruppe von mehreren Umläufen geschehen kann. Die Spannungswerte können hierbei in Beziehung zu den aktuellen Stromwerten gesetzt werden. Aus dem Spannungsverlauf ist erkennbar, ob die Dicke des Schmelzbads (7') sich ändert und insbesondere anwächst und ob es zu Schmelzbadkontakten und zu Kurzschlüssen kommt. Mittels eines zeitlichen Vorgabefensters kann zwischen kurzzeitig zufälligen Kurzschlüssen und prozessbedingter Kurzschlussgefahr durch Tropfenbildung und Schmelzenanwachsung unterschieden werden.

Über die Schweißeinrichtung (1), insbesondere das Steuerteil (20) und dessen Prozessregelung (30) kann steuernd oder regelnd in den Prozess eingegriffen werden, um eine Vergleichmäßigung des Anschmelzverhaltens der Werkstückränder (5,6) und eine bessere und gleichmäßigere Verteilung der Schmelzbäder (7') zu erreichen. Bei prozessbedingter Kurzschlussgefahr kann z.B. der Abstand (s) verändert und insbesondere vergrößert werden. Hierdurch steigt die Lichtbogenspannung. Die Schweißspannung und der Schweißstrom können über eine entsprechende Nachführung des Soll-Werts in der Stromregelung (27) nachgeführt werden. Der Abstand (s) wird prozessbezogen eingestellt und kann auch bei Veränderung der Schmelzeverteilung, Verringerung der Schmelzendicke oder dgl. wieder verringert werden.

In einer weiteren alternativen oder zusätzlichen Maßnahme kann die Treibeinrichtung (21) zur Veränderung der Umlaufgeschwindigkeit des Lichtbogens (8) angesteuert werden. Diese Veränderung und Beeinflussung kann über den Umlaufweg des Lichtbogens (8) gleichmäßig oder unterschiedlich sein. Insbesondere kann die Lichtbogengeschwindigkeit an den unteren Werkstückbereichen und insbesondere ab der untersten Werkstückstelle erhöht und in den oberen Werkstückbereichen reduziert werden. Hier werden die Schmelzen (7') aus der unteren Lage mitgenommen und in Lichtbogenlaufrichtung ein Stück nach oben transportiert. Die Schmelze (7') verteilt sich hierdurch an ein oder beiden Werkstückrändern (5,6) gleichmäßiger.

Am Ende des Erwärmungsvorgangs kann der Schweißstrom bzw. die Schweißspannung deutlich erhöht, z.B. verdreifacht werden, wodurch ein verstärktes Anschmelzen erfolgt. Zugleich kann der Abstand (s) prozessbezogen und auf das Schmelzverhalten abgestimmt, verändert und vergrößert werden. Aus einem tedenziellen Absinken der Lichtbogenspannung lässt sich hierbei auch auf den Grad des Schmelzverhaltens und die damit einhergehende Erwärmung der Bauteilränder (5,6) schließen. Hieraus lässt sich der prozessgünstige Zeitpunkt für den Stauchbeginn ableiten.

Von der Stromregelung (27) kann der Schweißstrom während der Erwärmung der Bauteile (3,4) nach dem Zünden des Lichtbogens (8) bis kurz vor Beginn des Stauchens und bis zum vorerwähnten sprunghaften Stromanstieg konstant gehalten werden. Die Prozessregelung kann hierbei über die prozessbezogene Einstellung des Abstands (s) erfolgen. Alternativ kann während dieser Erwärmungsphase der Schweißstrom verändert werden. Er kann insbesondere in einer Rampe reduziert werden bis zum vorgenannten sprunghaften Anstieg kurz vor Stauchbeginn. Die Stromrampe kann proportional zur Abstandsvergrößerung bzw. zum Hub (Δs) entsprechend Figur 5 und 6 verlaufen. Der Strom kann alternativ auch oszillieren und sich dabei ebenfalls proportional zum Hub (Δs) verändern. Dies kann innerhalb des vorerwähnten Stromprogramms geschehen.

Abwandlungen der gezeigten und beschriebenen Ausführungsform sind in verschiedener Weise möglich. Die Merkmale der verschiedenen beschriebenen Varianten können beliebig untereinander vertauscht und kombiniert werden. Ferner kann die Schweißeinrichtung (1) eine andere Ausbildung und Konstruktion aufweisen. Z.B. können beiden Werkstücke (3,4) beim Stauchen und/oder bei der Einstellung und Änderung des Abstands (s) bewegt werden.

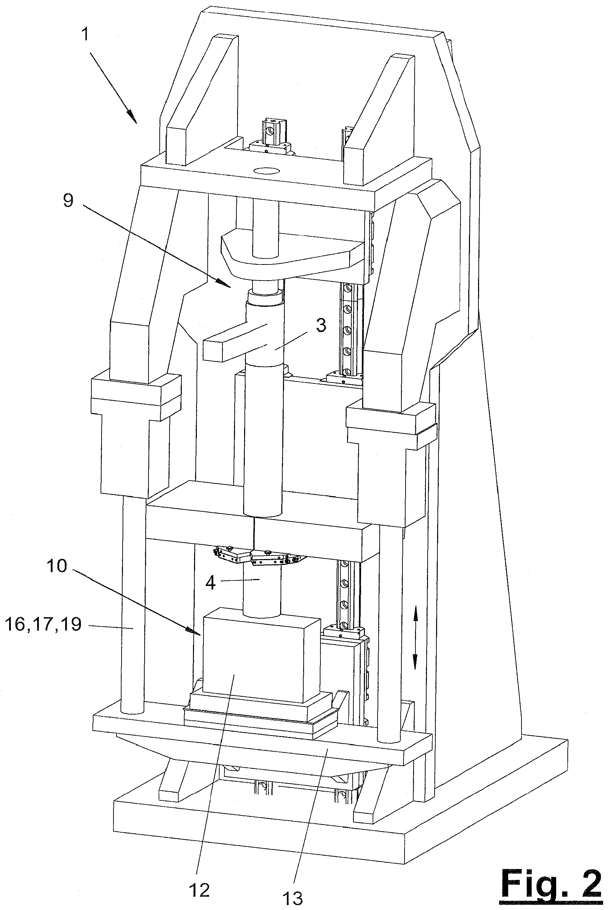

In Abwandlung der Ausführungsform von Figur 1 und 2 kann die Schweißeinrichtung (1) als Mehrkopfmaschine ausgebildet sein. Diese fügt z.B. in einem Arbeitsgang drei oder mehr fluchtende Werkstücke (3,4) an zwei oder mehr Fügestellen. Sie hat z.B. an einem gemeinsamen Gestell (14) zwei äußere Werkstückhalterungen (9,10) nebst Positionier- und Staucheinrichtungen (15) mit gemeinsamer oder getrennten Stromquelle(n) (25), Treibeinrichtungen (21) sowie Steuereinrichtungen (16) und mindestens einen Zwischen-Werkstückhalter für mindestens ein mittleres Werkstück. Bei einer solchen Mehrkopfmaschine mit bevorzugter Vertikal- oder Schrägausrichtung werden z.B. die Gussteile oben und unten an ein Stahlteil geschweißt, z.B. bei einem Achsrohr mit zwei Achsköpfen. Für das untere Gussteil ergibt sich eine schweiß- und schmelztechnisch günstige Anordnung entsprechend der Einkopfmaschine von Figur 1 und 2. Am oberen Gussteile sind die Verhältnisse u.U. ungünstiger, wobei den dortigen Prozessbedingungen durch eine eigenständige Steuerung oder Regelung des Abstands (s) bzw. Δs und der Prozessparameter Rechnung getragen werden kann. Außerdem können die Aufschmelzprozesse an den beiden Fügestellen aneinander angepasst werden und ein im wesentlichen gleichzeitiges Fügen mit einem Stauchhub von oben und unten ermöglichen.

Eine andere Mehrkopfmaschine kann mehrere der in Figur 1 und 2 gezeigten Köpfe nebeneinander aufweisen, die getrennt voneinander steuerbar sind und eigene Stromquellen haben oder mit einer gemeinsamen Stromquelle verbunden sind. Eine solche Mehrkopfmaschine kann alternierend arbeiten, wobei die Rüst- und Prozesszeiten der Köpfe einander überlagert werden und die Stromquelle besser und gleichmäßiger ausgenutzt wird. In einer weiteren Abwandlung können mehrere Schweißeinrichtungen (1) der in Figur 1 und 2 gezeigten Art nebeneinander angeordnet und mit einer gemeinsamen Schweißstromquelle (25) und ggf. einer gemeinsamen Steuerung (2) verbunden sein. Ferner ist es möglich, die Werkstückhalterungen (9,10) mit einer Schwenkbewegung und einer entsprechenden Ausbildung von Führung und Antrieb zuzustellen. Auch die Treibeinrichtung (21) kann anders ausgebildet sein und z.B. den Lichtbogen (8) mit einem Laserstrahl oder auf andere Weise führen und treiben. Ferner können andere, insbesondere massive, Werkstückgeometrien geschweißt werden.

### BEZUGSZEICHENLISTE

- 1: Schweißeinrichtung
- 2: Steuerung
- 3: Werkstück oben, links
- 4: Werkstück unten, rechts, Gussteil
- 5: Stirnfläche oben, links
- 6: Stirnfläche unten, rechts
- 7: Tropfen
- 7': Schmelzbad
- 8: Lichtbogen
- 9: Werkstückhalterung
- 10: Werkstückhalterung
- 11: Zentrumspanner
- 12: Werkstückspanner
- 13: Joch
- 14: Gestell
- 15: Positionier- und Staucheinrichtung
- 16: Steuereinrichtung
- 17: Hubeinrichtung
- 18: Schlitten
- 19: Antrieb
- 20: Steuerteil
- 21: Treibeinrichtung, Magneteinrichtung
- 22: Außenspule
- 23: Innenspule
- 24: Achse
- 25: Schweißstromquelle
- 26: Schweißstromsteuerung
- 27: Stromregelung
- 28: Erfassungseinrichtung für Werkstückverhalten
- 29: Messeinrichtung für Lichtbogenspannung
- 30: Regeleinrichtung
- 31: Messeinrichtung, Wegmessung

- s: Abstand
- Δs: Abstandsänderung

## Patentansprüche

1. Schweißeinrichtung zum Schweißen von Werkstücken (3,4) mit bewegtem Lichtbogen (8), wobei die Schweißeinrichtung (1) eine gesteuerte Schweißstromquelle (25) und eine Positionier- und Staucheinrichtung (15) für die Werkstücke (3,4) aufweist, welche die Werkstücke (3,4) beim Erwärmen auf einem Abstand (s) hält und anschließend staucht,
**dadurch gekennzeichnet, dass**
die Schweißstromquelle (25) eine Schweißstromsteuerung (26) mit einer Einrichtung (27) zur Schweißstromregelung, aufweist, welche den konstant oder gepulst abgegebenen Schweißstrom misst und durch Erhöhung oder Senkung der Schweißspannung auf einen einstellbaren Strom-Vorgabewert regelt,
wobei die Schweißeinrichtung (1) eine Einrichtung (28) zur Erfassung und Analyse von einem oder mehreren Prozessparametern, insbesondere der Lichtbogenspannung, und eine Steuerungseinrichtung (16) zur entsprechenden Steuerung und Veränderung (Δs) des Abstands (s) zwischen den Werkstücken (3,4) beim Erwärmen aufweist, wobei die Steuerungseinrichtung (16) ein Steuerteil (20) aufweist, das mit der Einrichtung (28) zur Erfassung und Analyse von Prozessparametern, insbesondere der Lichtbogenspannung, verbunden ist und eine Einrichtung (30) zur Prozessregelung aufweist, die den Abstand (s) in Abhängigkeit von dem oder den erfassten Prozessparameter(n) steuert oder regelt.

2. Schweißeinrichtung nach Anspruch 1, **dadurch gekennzeichnet, dass** die Schweißeinrichtung (1) als Vertikalmaschine für eine vertikale oder schräge Anordnung der Werkstücke (3,4) ausgebildet ist.

3. Schweißeinrichtung nach Anspruch 1 oder 2, **dadurch gekennzeichnet, dass** die Steuerungseinrichtung (16) eine Hubeinrichtung (17) zum Bewegen von mindestens einem Werkstück (3,4) aufweist, die eigenständig ausgebildet und angeordnet ist oder die mit der Positionier- und Staucheinrichtung (15) verbunden ist.

4. Schweißeinrichtung nach einem der vorhergehenden Ansprüche, **dadurch gekennzeichnet, dass** das Steuerteil (20) mit der Schweißstromsteuerung (26) verbunden ist, wobei die Prozessregelung (30) den Schweißstrom in Abhängigkeit von dem oder den erfassten Prozessparameter(n) steuert.

5. Schweißeinrichtung nach einem der vorhergehenden Ansprüche, **dadurch gekennzeichnet, dass** das Steuerteil (20) eine Recheneinheit mit einem oder mehreren Speichern für Programme und Daten und mit einer oder mehreren Schnittstellen sowie Geräten zur Ein- und Ausgabe von Daten aufweist und das Steuerteil (20) einen graphischen Editor aufweist.

6. Schweißeinrichtung nach einem der vorhergehenden Ansprüche, **dadurch gekennzeichnet, dass** die Schweißstromsteuerung (26) Stromprogramme verwendet, wobei der Strom-Vorgabewert über das Stromprogramm eingestellt und verändert wird.

7. Schweißeinrichtung nach einem der vorhergehenden Ansprüche, **dadurch gekennzeichnet, dass** die Schweißeinrichtung (1) für elektrisch leitende, insbesondere metallische, Werkstücke (3,4) aus unterschiedlichen, insbesondere unterschiedlich schmelzenden, Materialien ausgelegt ist.

8. Schweißeinrichtung nach einem der Ansprüche 3 bis 7, **dadurch gekennzeichnet, dass** die Hubeinrichtung (17) mindestens eine bewegliche und geführte Werkstückhalterung (9,10) und mindestens einen steuerbaren Antrieb (19) aufweist, wobei eine untere Werkstückhalterung (10) für ein Werkstück (4) mit der niedrigeren Schmelztemperatur, insbesondere für ein Werkstück (4) aus metallischem Gussmaterial, vorgesehen ist.

9. Verfahren zum Schweißen von Werkstücken (3,4) mit bewegtem Lichtbogen (8), wobei die Werkstücke (3,4) von einer Schweißeinrichtung (1) mit einer gesteuerten Schweißstromquelle (25) mit einem geregelten Schweißstrom beaufschlagt und mit einer Positionier- und Staucheinrichtung (15) beim Erwärmen auf einem Abstand (s) gehalten und anschließend gestaucht werden,
**dadurch gekennzeichnet, dass**
wobei die Schweißstromquelle (25) eine Schweißstromsteuerung (26) mit einer Einrichtung (27) zur Schweißstromregelung, aufweist, welche den konstant oder gepulst abgegebenen Schweißstrom misst und durch Erhöhung oder Senkung der Schweißspannung auf einen einstellbaren Strom-Vorgabewert regelt,
wobei mit einer Einrichtung (28) ein oder mehrere Prozessparameter, insbesondere die Lichtbogenspannung, erfasst und analysiert werden, wobei beim Erwärmen der Abstand (s) zwischen den Werkstücken (3,4) mit einer Steuerungseinrichtung (16) entsprechend gesteuert verändert (Δs) wird, wobei die Steuerungseinrichtung (16) ein Steuerteil (20) aufweist, das mit der Einrichtung (28) zur Erfassung und Analyse von Prozessparametern, insbesondere der Lichtbogenspannung, verbunden ist und eine Einrichtung (30) zur Prozessregelung aufweist, die den Abstand (s) in Abhängigkeit von dem oder den erfassten Prozessparameter(n) steuert oder regelt.

10. Verfahren nach Anspruch 9, **dadurch gekennzeichnet, dass** beim Erwärmen der Schweißstrom entsprechend des oder der erfassten Prozessparameter gesteuert wird.

11. Verfahren nach Anspruch 9 oder 10, **dadurch gekennzeichnet, dass** elektrisch leitende, insbesondere metallische, Werkstücke (3,4) aus unterschiedlichen, insbesondere unterschiedlich schmelzenden, Materialien geschweißt werden.

12. Verfahren nach Anspruch 9, 10 oder 11, **dadurch gekennzeichnet, dass** Werkstücke (3,4) mit unterschiedlichen Wandstärken geschweißt werden.

13. Verfahren nach einem der Ansprüche 9 bis 12, **dadurch gekennzeichnet, dass** die Werkstücke (3,4) mit vertikaler oder schräger Ausrichtung geschweißt werden.

14. Verfahren nach einem der Ansprüche 9 bis 13, **dadurch gekennzeichnet, dass** bei einer vertikalen oder schrägen Ausrichtung und im Schmelzverhalten unterschiedlichen Werkstücken (3,4), das schneller schmelzende Werkstück (4), insbesondere das Werkstück (4) mit der niedrigeren Schmelztemperatur, unten angeordnet wird.

15. Verfahren nach einem der Ansprüche 9 bis 14, **dadurch gekennzeichnet, dass** bei einer vertikalen oder schrägen Ausrichtung ein Werkstück (4) aus metallischem Gussmaterial unten und ein Werkstück (3) aus Stahl oben angeordnet ist.

## Claims

1. Welding device for welding workpieces (3, 4) by means of a movable arc (8), wherein the welding device (1) comprises a controlled welding current source (25) and a positioning and upsetting device (15) for the workpieces (3, 4) which, during the heating operation, keeps the workpieces (3, 4) spaced apart at a distance (s) and then upsets them, **characterized in that** the welding current source (25) comprises a welding current controller (26) having a welding current regulating device (27), which measures the constant or pulsed welding current output and regulates it to a settable current predefined value by increasing or decreasing the welding voltage, wherein the welding device (1) comprises a device (28) for recording and analysing one or more process parameters, in particular the arc voltage, and a control device (16) for correspondingly controlling and modifying (Δs) the distance (s) between the workpieces (3, 4) during the heating operation, wherein the control device (16) comprises a control part (20), which is connected to the device (28) for recording and analysing process parameters, in particular the arc voltage, and comprises a process regulating device (30) which controls or regulates the distance (s) on the basis of the process parameter(s) recorded.

2. Welding device according to Claim 1, **characterized in that** the welding device (1) is in the form of a vertical machine for a vertical or slanted arrangement of the workpieces (3, 4).

3. Welding device according to Claim 1 or 2, **characterized in that** the control device (16) comprises a lifting device (17) which is intended for moving at least one workpiece (3, 4) and which has a self-contained form and arrangement or is connected to the positioning and upsetting device (15).

4. Welding device according to one of the preceding claims, **characterized in that** the control part (20) is connected to the welding current controller (26), wherein the process regulator (30) controls the welding current on the basis of the process parameter(s) recorded.

5. Welding device according to one of the preceding claims, **characterized in that** the control part (20) comprises a computing unit having one or more memories for programs and data and having one or more interfaces and also apparatuses for inputting and outputting data, and the control part (20) comprises a graphics editor.

6. Welding device according to one of the preceding claims, **characterized in that** the welding current controller (26) uses current programs, wherein the current predefined value is set and modified via the current program.

7. Welding device according to one of the preceding claims, **characterized in that** the welding device (1) is designed for electrically conductive, in particular metallic, workpieces (3, 4) of different materials, in particular materials that melt in different ways.

8. Welding device according to one of Claims 3 to 7, **characterized in that** the lifting device (17) comprises at least one movable and guided workpiece mount (9, 10) and at least one controllable drive (19), wherein a bottom workpiece mount (10) is provided for a workpiece (4) having a lower melting temperature, in particular for a workpiece (4) of metallic casting material.

9. Method for welding workpieces (3, 4) by means of a movable arc (8), wherein a welding device (1) subjects the workpieces (3, 4) to a regulated welding current by means of a controlled welding current source (25), and, during the heating operation, keeps them spaced apart at a distance (s) and then upsets them by means of a positioning and upsetting device (15), **characterized in that** wherein the welding current source (25) comprises a welding current controller (26) having a welding current regulating device (27), which measures the constant or pulsed welding current output and regulates it to a settable current predefined value by increasing or decreasing the welding voltage, wherein one or more process parameters, in particular the arc voltage, are recorded and analysed by means of a device (28), wherein, during the heating operation, the distance (s) between the workpieces (3, 4) is modified (Δs) in a correspondingly controlled manner by means of a control device (16), wherein the control device (16) comprises a control part (20), which is connected to the device (28) for recording and analysing process parameters, in particular the arc voltage, and comprises a process regulating device (30) which controls or regulates the distance (s) on the basis of the process parameter(s) recorded.

10. Method according to Claim 9, **characterized in that**, during the heating operation, the welding current is controlled in a manner corresponding to the process parameter(s) recorded.

11. Method according to Claim 9 or 10, **characterized in that** electrically conductive, in particular metallic, workpieces (3, 4) of different materials, in particular materials that melt in different ways, are welded.

12. Method according to Claim 9, 10 or 11, **characterized in that** workpieces (3, 4) with different wall thicknesses are welded.

13. Method according to one of Claims 9 to 12, **characterized in that** the workpieces (3, 4) are welded with a vertical or slanted orientation.

14. Method according to one of Claims 9 to 13, **characterized in that**, in the case of a vertical or slanted orientation and workpieces (3, 4) with different melting behaviour, the workpiece (4) which melts faster, in particular the workpiece (4) with the lower melting temperature, is arranged at the bottom.

15. Method according to one of Claims 9 to 14, **characterized in that**, in the case of a vertical or slanted orientation, a workpiece (4) of metallic casting material is arranged at the bottom and a workpiece (3) of steel is arranged at the top.

## Revendications

1. Dispositif de soudage permettant de souder des pièces (3, 4) à l'aide d'un arc électrique mobile (8), dans lequel le dispositif de soudage (1) présente une source de courant de soudage commandé (25) et un dispositif de positionnement et de refoulement (15) pour les pièces (3, 4) qui maintient à une distance (s) les pièces (3, 4) lors de l'échauffement et les refoule ensuite,
**caractérisé en ce que** la source de courant de soudage (25) présente un système de commande de courant de soudage (26) pourvu d'un dispositif (27) de régulation de courant de soudage qui mesure le courant de soudage fourni de manière constante ou pulsée, et le régule en augmentant ou en réduisant la tension de soudage à une valeur de courant par défaut réglable, dans lequel le dispositif de soudage (1) présente un dispositif (28) de détection et d'analyse d'un ou de plusieurs paramètres de processus, en particulier de la tension d'arc électrique, et un dispositif de commande (16) pour commander et modifier (Δs) de manière appropriée la distance (s) entre les pièces (3, 4) lors de l'échauffement, dans lequel le dispositif de commande (16) présente un élément de commande (20) qui est relié au dispositif (28) de détection et d'analyse de paramètres de processus, en particulier de la tension d'arc électrique, et présente un dispositif (30) de régulation de processus qui commande ou régule la distance (s) en fonction du ou des paramètre (s) de processus détecté(s).

2. Dispositif de soudage selon la revendication 1, **caractérisé en ce que** le dispositif de soudage (1) est réalisé sous la forme d'une presse verticale pour une disposition verticale ou oblique des pièces (3, 4).

3. Dispositif de soudage selon la revendication 1 ou 2, **caractérisé en ce que** le dispositif de commande (16) présente un dispositif de levage (17) pour déplacer au moins une pièce (3, 4), qui est réalisé et disposé de manière autonome ou qui est relié au dispositif de positionnement et de refoulement (15).

4. Dispositif de soudage selon l'une quelconque des revendications précédentes, **caractérisé en ce que** l'élément de commande (20) est relié au système de commande de courant de soudage (26), dans lequel la régulation de processus (30) commande le courant de soudage en fonction du ou des paramètre(s) de processus détecté (s) .

5. Dispositif de soudage selon l'une quelconque des revendications précédentes, **caractérisé en ce que** l'élément de commande (20) présente une unité de calcul pourvue d'une ou de plusieurs mémoires pour des programmes et des données et d'une ou de plusieurs interfaces ainsi que d'appareils pour l'entrée et la sortie de données, et l'élément de commande (20) présente un éditeur graphique.

6. Dispositif de soudage selon l'une quelconque des revendications précédentes, **caractérisé en ce que** le système de commande de courant de soudage (26) utilise des programmes de courant, dans lequel la valeur de courant par défaut est réglée ou modifiée par le programme de courant.

7. Dispositif de soudage selon l'une quelconque des revendications précédentes, **caractérisé en ce que** le dispositif de soudage (1) est conçu pour des pièces (3, 4) électriquement conductrices, en particulier métalliques, constituées de matériaux différents, en particulier de matériaux présentant des points de fusion différents.

8. Dispositif de soudage selon l'une quelconque des revendications 3 à 7, **caractérisé en ce que** le dispositif de levage (17) présente au moins un porte-pièce (9, 10) mobile et guidé et au moins un dispositif d'entraînement (19) pouvant être commandé, dans lequel un porte-pièce inférieur (10) est prévu pour une pièce (4) ayant la température de fusion la plus basse, en particulier pour une pièce (4) en matériau de fonte métallique.

9. Procédé de soudage de pièces (3, 4) à l'aide d'un arc électrique mobile (8), dans lequel les pièces (3, 4) sont soumises à un courant de soudage régulé par un dispositif de soudage (1) muni d'une source de courant de soudage commandée (25), et sont maintenues à une distance (s) et ensuite refoulées par un dispositif de positionnement et de refoulement (15) lors de l'échauffement,
**caractérisé en ce que** la source de courant de soudage (25) présente un système de commande de courant de soudage (26) muni d'un dispositif (27) de régulation de courant de soudage qui mesure le courant de soudage fourni de manière constante ou pulsée et le régule à une valeur de courant par défaut réglable en augmentant ou en réduisant la tension de soudage, dans lequel un dispositif (28) détecte et analyse un ou plusieurs paramètres de processus, en particulier la tension d'arc électrique, dans lequel, lors de l'échauffement, la distance (s) entre les pièces (3, 4) est modifiée (Δs) en conséquence de manière commandée par un dispositif de commande (16), dans lequel le dispositif de commande (16) présente un élément de commande (20) qui est relié au dispositif (28) de détection et d'analyse de paramètres de processus, en particulier de la tension d'arc électrique, et présente un dispositif (30) de régulation de processus qui commande ou régule la distance (s) en fonction du ou des paramètre (s) de processus détecté(s).

10. Procédé selon la revendication 9, **caractérisé en ce que** lors de l'échauffement, le courant de soudage est commandé selon le ou les paramètre(s) de processus détecté(s) .

11. Procédé selon la revendication 9 ou 10, **caractérisé en ce que** des pièces électriquement conductrices (3, 4), en particulier métalliques, constituées de matériaux différents, en particulier de matériaux présentant des points de fusion différents, sont soudées.

12. Procédé selon la revendication 9, 10 ou 11, **caractérisé en ce que** des pièces (3, 4) de différentes épaisseurs de paroi sont soudées.

13. Procédé selon l'une quelconque des revendications 9 à 12, **caractérisé en ce que** les pièces (3, 4) sont soudées dans un alignement vertical ou oblique.

14. Procédé selon l'une quelconque des revendications 9 à 13, **caractérisé en ce que** dans un alignement vertical ou oblique et pour des pièces (3, 4) ayant un comportement de fusion différent, la pièce (4) à fusion plus rapide, en particulier la pièce (4) ayant la température de fusion la plus basse, est disposée en bas.

15. Procédé selon l'une quelconque des revendications 9 à 14, **caractérisé en ce que** dans un alignement vertical ou oblique, une pièce (4) en matériau de fonte métallique est disposée en bas et une pièce (3) en acier est disposée en haut.
